(19) Europäisches Patentamt
European Patent Office
Office européen des brevets

(11) **EP 2 330 930 B1**

(12) **EUROPÄISCHE PATENTSCHRIFT**

(45) Veröffentlichungstag und Bekanntmachung des Hinweises auf die Patenterteilung:
**30.05.2012 Patentblatt 2012/22**

(51) Int Cl.:
*A23L 2/44* (2006.01)  *C12H 1/14* (2006.01)

(21) Anmeldenummer: **09783221.6**

(22) Anmeldetag: **21.09.2009**

(86) Internationale Anmeldenummer:
**PCT/EP2009/062170**

(87) Internationale Veröffentlichungsnummer:
**WO 2010/034678 (01.04.2010 Gazette 2010/13)**

(54) **VERFAHREN ZUR KONSERVIERUNG VON GETRÄNKEN**

METHOD FOR PRESERVING DRINKS

PROCÉDÉ DE CONSERVATION DE BOISSONS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **24.09.2008 DE 102008048714**

(43) Veröffentlichungstag der Anmeldung:
**15.06.2011 Patentblatt 2011/24**

(73) Patentinhaber: **LANXESS Deutschland GmbH 51369 Leverkusen (DE)**

(72) Erfinder:
• **HOFFMANN, Manfred**
  **47906 Kempen (DE)**
• **BRODA, Ingo**
  **51570 Windeck (DE)**
• **VOGL, Erasmus**
  **266071 Qingdao (CN)**

(56) Entgegenhaltungen:
**US-A- 3 936 269      US-A- 6 136 356**
**US-A1- 2004 161 517**

**Beschreibung**

Die Erfindung betrifft ein neues Verfahren zur Konservierung von Getränken.

Es besteht aktuell der Trend zu natürlichen Lebensmitteln, das heißt der Verbraucher bevorzugt Nahrungsmittel ohne künstliche Zusätze. Bei Getränken bedarf es zur Abfüllung in der Regel konservierender Zusätze oder Verfahren. Derzeit gibt es eine ganze Reihe von möglichen Stabilisierungsmitteln, die jedoch in ihrer Wirkung noch verbesserungsbedürftig sind. Mitunter sind diese oft künstlichen Zusätze auch deklarationspflichtig, was zumindest einen Vermarktungsnachteil solcher Getränke mit sich bringt.

Dialkyldicarbonate werden in der Getränkeindustrie zur Kaltentkeimung von alkoholfreien karbonisierten oder stillen Fruchtsaftgetränken, Fruchtsäften, Weinen, alkoholfreien Weinen, Ciders, EisTees und anderen Getränken eingesetzt. Diese Technologie der Getränkestabilisierung hat eine Reihe von Vorteilen. Der herausragende Vorteil liegt dabei in der Tatsache begründet, dass Geschmack und Farbe im Gegensatz zur Heißabfüllung nicht beeinflusst werden. Auch gegenüber persistenten Konservierungsstoffen wie Benzoat bzw. Benzoesäure oder Sorbat bzw. Sorbinsäure besteht der Vorteil insbesondere in der Abwesenheit jeglicher geschmacklicher Beeinträchtigungen. Gegenüber einer kaltaseptischen Abfüllung sind besonders die ganz wesentlich geringeren Investitionskosten in Anlagentechnik als Vorteil beim Einsatz von Dialkyldicarbonaten bekannt.

Die Substanzklasse der Dialkyldicarbonate hat die besondere Eigenschaft, in Kontakt mit entsprechenden (wässrigen) Getränken in die abgeleiteten Alkohole und Kohlendioxid zu hydrolysieren. Aus diesem Grund hat ein entsprechend behandeltes Getränk zum Zeitpunkt des Konsums im eigentlichen Sinne keine Konservierung mehr, d.h. die Getränke sind nach dem Öffnen anfällig gegenüber mikrobiologischem Befall. Es handelt sich also eher um ein technisches Hilfsmittel, nicht um einen Zusatzstoff, weshalb in vielen Ländern die Verwendung von Dialkyldicarbonaten im Übrigen nicht auf dem Etikett des Getränkes angegeben werden muss.

Der vorliegenden Erfindung hat nun die Aufgabe zugrunde gelegen, die stabilisierenden Eigenschaften bei Abfüllung von Getränken weiter zu verbessern. Überraschenderweise wurde nun ein Verfahren gefunden, mit dem es möglich ist die stabilisierende Wirkung von Dialkyldicarbonaten weiter zu verbessern.

Es wurde nun ein neues Verfahren zur Stabilisierung von Getränken gefunden, das dadurch gekennzeichnet ist, dass man

A) das Getränk mit Limonen oder Limonen-haltigen Formulierungen versetzt und

B) nachfolgend dem Getränk Dialkyldicarbonat, insbesondere Dimethyldicarbonat zugibt.

Limonen kann bspw. als D-Limonen (R(+)-Limonen), als L(-)-Limonen oder als Mischung der beiden bspw. als deren Racemat eingesetzt werden. D-Limonen (R(+)-Limonen) ist beispielsweise ein Bestandteil von Schalen der Zitrusfrüchte. Limonen-haltige Formulierungen wurden zwar zur mikrobiologischen Stabilisierung von Getränken schon vorgeschlagen (US 7.258.883), diese sind allein jedoch gegen viele der häufig vorkommenden getränkeschädigenden Mikroorganismen nur sehr bedingt wirksam und daher nur von sehr begrenztem Nutzen für die Konservierung im Abfüllbetrieb. Gegenüber dem Stand der Technik weist das Verfahren folgende Vorteile auf:

- Es konnte eine synergistische Wirkverstärkung der Wirkungen der einzelnen Bestandteile gegen wichtige Keime gezeigt werden.

- Das Verfahren ergibt in Summe eine Verbreiterung des Wirkspektrums, d.h. Wirkungslücken werden unerwartet geschlossen.

- Das Verfahren hat den Vorteil dass die resultierende Stabilisierung der Getränke sich auch zeitlich positiv verhält, d.h. Kurz- und Langzeit-Wirkung ergänzen sich.

- Das Verfahren hat weiterhin den Vorteil dass die Getränke nach Anwendung des Verfahrens keine künstlichen Konservierungsstoffe mehr enthalten.

- Die Reihenfolge der Zugabe hat sich als wichtig herausgestellt, um die gewünschte Wirkung zu erzielen.

Limonen kann dabei in verschiedenen Formen eingesetzt werden. Sowohl Extrakte aus der Natur sind geeignet als auch synthetisch gewonnenes Limonen. Der Einsatz von Limonen aus Zitrusschalen bietet den Vorteil dass die zusätzlichen Nebenbestandteile an enthaltenen Terpenen ebenfalls eine Wirkung beitragen können. Zweckmäßigerweise wird das Limonen aber als wässrig emulgiertes Limonen verwendet. Als Co-Lösungsmittel bzw. Emulgatoren sind vorzugsweise alle lebensmittelzugelassenen Emulgatoren verwendbar wie beispielsweise Carrageen, Polysorbat 80, Agar, Pectin, Lecithin, Sojalecithin, Tween® 80, Tween® 60, oder Tween® 20 sowie Wasser, aliphatische Mono-Alkohole, insbesondere $C_1$-$C_6$-Alkohole, wie beispielsweise Ethanol, n-Propanol oder Isopropanol, Glykole, insbesondere Ethylenglykol oder Diethylenglykol sowie Dimethylsulfoxid (DMSO). Auch Mischungen dieser Emulgatoren bzw. Lösungsmittel können vorteilhaft eingesetzt werden.

Bevorzugt wird Limonen als Naturextrakt mit einem Gehalt von Limonen von größer als 85 Gew.-%, vorzugsweise größer 90% eingesetzt. Dieses Extrakt hat einen Anteil an Decanal und Octanal von zusammen vorzugsweise kleiner 5 Gew.%, insbesondere kleiner 1 Gew.-%.

Auch das L(-)-Limonen kann verwendet werden, wobei hier vorzugsweise Extrakte aus Edeltannen oder Pfefferminzöle zum Einsatz kommen. Natürliches oder synthetisches racemisches Limonen kann ebenfalls zum Einsatz kommen.

Die bevorzugt eingesetzte Limonen Emulsion ist vorzugsweise wässrig und besitzt vorzugsweise einen Limonen-Gehalt von 2 bis 30 Gew.%, besonders bevorzugt von 5 bis 25 Gew.-%.

Die vorzugsweise ebenfalls mitverwendeten Emulgatoren bzw. Co-Lösungsmittel werden vorzugsweise in einer Menge von 0,05 bis 15 Gew.%, insbesondere von 0,5 bis 10 Gew.-% bezogen auf die Emulsion mitverwendet. Bevorzugt wird Sojalecithin, Carrageen, Polysorbat 80, Agar, oder Pectin als Emulgator eingesetzt, insbesondere Sojalecithin.

Als weitere ggf. mitzuverwendenen Zusätze kommen bspw. Bienenwachs sowie Alkali- und Erdalkalihydroxyde wie KOH, NaOH, und CaOH in Frage. Bevorzugt werden die weiteren Zusätze in Mengen von kleiner 2 Gew.-% bezogen die Formulierung, insbesondere auf die wässrige Emulsion eingesetzt. Bienenwachs wird vorzugsweise in einer Menge von 0,01 bis 1 Gew.-% zugegeben.

Das verwendete Dialkyldicarbonat ist vorzugsweise Dimethyldicarbonat und besitzt vorzugsweise eine Reinheit von größer als 99.8%

Als Getränke sind neben grünem Tee, schwarzem Tee sowie anderen Tee-Sorten und Tee-basierten Getränken auch karbonisierte und nicht-carbonisierte alkoholfreie Erfrischungsgetränke, Fruchtsäfte, Fruchtnektare, Weine, alkoholfreie Getränke, Cidre, Eistees, alkoholische Mischgetränke, aromatisierte Wässer oder Sportgetränke zu nennen. Die Getränke können bevorzugt auch zusätzlich mit Sorbinsäure oder Sorbaten konserviert sein. Bevorzugte Getränke enthalten Sorbinsäure oder Sorbat.

Die Zugabe von Limonen oder Formulierungen von Limonen zum Getränk erfolgt vorzugsweise im Mischtank bei der Ausmischung des Fertiggetränkes, kann jedoch auch schon dem zu verdünnenden Getränke-Konzentrat zugegeben werden. Im Allgemeinen wird das Limonen in Mengen von 10 bis 5000 ppm, vorzugsweise von 50 bis 2000 ppm, insbesondere von 50 bis 1000 ppm, besonders bevorzugt 50 bis 500 ppm zugegeben. Die Temperaturen betragen dabei von 0 bis 30°C. Ebenfalls möglich ist die Zugabe durch Dosierpumpen wie sie auch für die Zugabe von Aromen verwendet werden.

Die Zugabe von Dialkyldicarbonat, insbesondere von DMDC zum Getränk erfolgt vorzugsweise bei Temperaturen von 0 bis 25°C, wobei Mengen von 1 bis 250 ppm, bezogen auf das Getränk, insbesondere 40 bis 250 ppm bevorzugt sind und insbesondere mit Hilfe einer Dosierpumpe direkt in den Getränkestrom zudosiert werden. Eine dem Getränk proportionale Dosierung kann dabei durch ein in den Getränkestrom eingebautes Durchflussmessgerät sichergestellt werden. Die Zugabe des Dialkyldicarbonats erfolgt dabei insbesondere innerhalb von 100 Stunden, vorzugsweise von 10 Stunden, insbesondere innerhalb von 1 Stunde nach der Limonenzugabe.

Besondern bevorzugt wird das erfindungsgemäße Verfahren gegen folgende Stämme eingesetzt: Saccharomyces sp., Lactobacillus sp., Acetobacter sp., Penicillium sp., Aspergillus sp., Leuconostoc sp., Zygosaccharomyces sp., und andere.

**Beispiele:**

**Beispiel 1**

Die Wirkung der einzelnen Bestandteile DMDC und Limonen (in einer Formulierung) und die Wirkung von Mischungen aus DMDC und Limonen (in einer Formulierung) gegen *Saccharomyces cerevisiae* wurde getestet.

Hierzu wurde ein Apfelsaftgetränk mit 375 Keimen *Saccharomyces cerevisiae* pro ml angeimpft, und die in der Tabelle 1 angegebenen Wirkstoffkonzentrationen zugegeben. In der Tabelle steht **DMDC** für Dimethyldicarbonat, zugegeben als solches. **LF** steht für eine Formulierung mit 10 % Limonen (Wasser 80,9 w./w.%, R(+)-Limonen aus Zitrusschalen 10,2 %, Ethanol 6,7 %, Soyalecithin 2,0 %, Kaliumhydroxid 0,1%, Bienenwachs 0,1 %).

Zunächst wurde LF zugegeben und daraufhin DMDC. Im Anschluss daran wurden die Mischungen gründlich geschüttelt und eine Woche bei 26°C bebrütet. Daraufhin wurde die vorhandene Keimzahl bestimmt. Die Ergebnisse sind der Tabelle 1 zu entnehmen.

**Tabelle 1**

| Keimeinsaat | 375 Keime/ml, Auswertung nach einer Woche | | | | |
|---|---|---|---|---|---|
| Konzentration | ohne LF | 1500 mg/l LF | 2000 mg/l LF | 2500 mg/l LF | 5000 mg/l LF |
| ohne DMDC | +/+ | +/+ | +/+ | +/+ | +/+ |
| 10 ppm DMDC | +/+ | +/+ | +/+ | +/+ | n.d |
| 25 ppm DMDC | +/+ | +/+ | +/244 | +/82 | n.d |
| 50 ppm DMDC | +/+ | -/- | -/- | -/- | n.d |
| 100 ppm DMDC | +/+ | -/- | -/- | -/- | n.d |
| 150 ppm DMDC | 152/+ | -/- | -/- | -/- | n.d |
| | | | | | |
| **Einheiten:** Koloniebildende Einheiten pro 1 mL untersuchte Getränkeprobe + = >300 Keime, - = keine Keime sichtbar, n.d. = nicht durchgeführt Die Experimente wurden jeweils doppelt durchgeführt. | | | | | |

Es ist zu erkennen dass die Mischung eine wesentlich verbesserte Wirksamkeit aufweist als die einzelnen Bestandteile.

Die Wirksamkeit, definiert als frei von Keimen, des DMDC alleine liegt oberhalb 150 ppm. Die Wirksamkeit von LF liegt oberhalb 5000 ppm. Die Wirksamkeit einer geeigneten Mischung liegt unterhalb 50 ppm DMDC und 1500 ppm LF. Damit errechnet sich ein "Combination Index" (siehe Ting-Chao Chou, "Theoretical Basis, Experimental Design and Computerized Simulation of Synergism and Antagonism in Drug Combination Studies", Pharmacological Reviews 58 (3) 2006, 621-681) von:

$$CI = [\ c(DMDC\ Mischung)\ /\ c(DMDC\ alleine)\ ] + [\ c(LF\ Mischung)\ /\ c(LF\ alleine)\ ]$$

$$CI = 50\ /\ 150 + 1500\ /\ 5000 = 0.63\ (genauer\ <0.63)$$

Damit ist die Mischung synergistisch wirksam.

### Beispiel 2

Die Wirkung von DMDC gegen *Lactobacillus brevis* wurde mit der von Limonen verglichen. Während die Wirkung von DMDC generell sehr breit gegen viele Mikroorganismen gerichtet ist ergänzt sich hier das Wirkspektrum mit Limonen sehr gut.

Die Tabelle 2 gibt die Ergebnisse der mikrobiologischen Auszählung von Kolonien wieder. Dazu wurde eine entkeimte Getränke-Matrix (Apfelsaft/Wasser 1:1) mit unterschiedlichen Keimeinsaaten an *L. brevis* angeimpft sodann mit DMDC oder Limonen in den angegebenen Konzentrationen versetzt, die Proben gut geschüttelt, und nach 24 Stunden auf geeigneten AgarPlatten die jeweils vorliegenden Keimzahlen bestimmt (je doppelt).

"Limonen emulgiert" steht für eine Lösung von synthetischem R(+)-Limonen (10 Gew.-%) und Sojalecithin (2 Gew.-%) in Wasser. Vor Gebrauch wird diese Mischung mittelsmechanischem Scheren frisch emulgiert.

"Limonen formuliert" steht für eine Mischung an Wasser 80,9 w./w.%, R(+)-Limonen aus Zitrusschalen 10,2 %, Ethanol 6,7 %, Soyalecithin 2,0 %, Kaliumhydroxid 0,1%, und Bienenwachs 0,1 % die durch geeignete Scherkräfte emulgiert wurde.

**Tabelle 2**

| Prüfkeim | *Lactobacillus brevis,* Keimzahlbestimmung nach 24 Stunden | | |
|---|---|---|---|
| Keimeinsaat ca. | 100 Keime /mL | 1000 Keime /mL | 10000 Keime /mL |
| Wirkstoff | | | |
| Konzentrationen | | | |
| kein Wirkstoff | 88/91 | +/+ | +/+ |
| DMDC | 54/75 | +/+ | +/+ |
| Limonen emulg. 500 ppm | -/1 | 1/5 | 33/44 |
| Limonen formul. 500 ppm | 3/1 | 8/13 | 106/111 |
| Einheiten: Koloniebildende Einheiten pro 1 mL untersuchte Getränkeprobe, + = >300 Keime, - = keine Keime sichtbar | | | |

### Beispiel 3

Ein Orangensaftgetränk (ca. 20% Orangensaft, ca. 8 Brix) ohne Sorbatzusätze, wurde zunächst mit 500 ppm einer emulgierten Mischung an Wasser 80,9 w./w.%, R(+)-Limonen aus Zitrusschalen 10,2 %, Ethanol 6,7 % und Sojalecithin 2,0 %, versetzt und anschließend (innerhalb von 5 Stunden) mit 200 ppm DMDC versetzt. Danach wurde das Getränk direkt auf einer Getränke-Abfülllinie (10 000 1/h) in 0.51 PET Flaschen abgefiillt.

Dabei wurde die Limonen-haltige Mischung während der Ausmischung des Getränkes zugegeben, wohingegen zur Dosierung von DMDC eine dem Füller vorgeschaltete elektromagnetische Dosierpumpe verwendet wurde.

Als Vergleichsexperiment wurde das gleiche Getränk unkonserviert gefüllt, bzw. nur mit DMDC oder nur mit Limonen behandelt gefüllt.

Die Proben wurden danach regelmäßig optisch und organoleptisch Begutachtet.

Ergebnisse: Aufgeführt sind die mikrobiologischen Haltbarkeiten der Proben.

(a) Mit DMDC und Limonen konserviert: > 100 Tage
(b) Unkonserviert: ca. 2 Tage
(c) Mit DMDC konserviert: ca. 20 Tage
(d) Mit Limonen konserviert: ca. 2 Tage

### Beispiel 4

Ein Orangensaftgetränk (ca. 20% Orangensaft, ca. 8 Brix) enthaltend Sorbinsäure als Kaliumsorbat (entspricht 100 ppm Sorbinsäure), wurde zunächst mit 500 ppm einer emulgierten Mischung an Wasser 80,9 w./w.%, R(+)-Limonen aus Zitrusschalen 10,2 %, Ethanol 6,7 %, Sojalecithin 2,0 %, Kaliumhydroxid 0,1%, und Bienenwachs 0,1 % versetzt und anschließend (innerhalb von 5 Stunden) mit 200 ppm DMDC versetzt. Danach wurde das Getränk direkt auf einer Getränke-Abfülllinie (10 000 l/h) in 0.5 1 PET Flaschen abgefüllt.

Dabei wurde die Limonen-haltige Mischung während der Ausmischung des Getränkes zugegeben, wohingegen zur Dosierung von DMDC eine dem Füller vor geschaltete elektromagnetische Dosierpumpe verwendet wurde.

Als Vergleichsexperiment wurde das gleiche Getränk unkonserviert gefiillt, bzw. nur mit DMDC oder nur mit Limonen behandelt gefiillt.

Die Proben wurden danach regelmäßig optisch und organoleptisch Begutachtet.

Ergebnisse: Aufgeführt sind die mikrobiologischen Haltbarkeiten der Proben.

(e) Mit Sorbinsäure, DMDC und Limonen konserviert: > 100 Tage

(f) Nur mit Sorbinsäure: ca. 6 Tage

(g) Mit Sorbinsäure und DMDC konserviert: > 100 Tage

(h) Mit Sorbinsäure und Limonen konserviert: ca. 5 Tage

**Patentansprüche**

1. Verfahren zur Stabilisierung von Getränken, das **dadurch gekennzeichnet ist, dass** man

   A) das Getränk mit Limonen oder Limonen-haltigen Formulierungen versetzt und
   B) nachfolgend dem Getränk Dialkyldicarbonat, insbesondere Dimethyldicarbonat zugibt.

2. Verfahren gemäß Anspruch 1 **dadurch gekennzeichnet, dass** die limonenhaltige Formulierung zusätzlich Bienenwachs enthält.

3. Verfahren gemäß Anspruch 1 und 2 **dadurch gekennzeichnet, dass** Sorbinsäure-haltige Getränke vor mikrobiellem Befall stabilisiert werden.

4. Verfahren gemäß Anspruch 1, **dadurch gekennzeichnet, dass** man Limonen in einer Menge von 10 bis 5000 ppm einsetzt.

**Claims**

1. Method of stabilizing drinks which is **characterized in that**

   A) the drink is admixed with limonene or limonene-containing formulations and
   B) subsequently dialkyl dicarbonate, in particular dimethyl dicarbonate, is added to the drink.

2. Method according to Claim 1, **characterized in that** the limonene-containing formulation additionally contains beeswax.

3. Method according to Claims 1 and 2, **characterized in that** drinks containing sorbic acid are stabilized against microbial infection.

4. Method according to Claim 1, **characterized in that** limonene is used in an amount from 10 to 5000 ppm.

**Revendications**

1. Procédé de stabilisation de boissons, **caractérisé en ce que**

   A) la boisson est mélangée avec du limonène ou des formulations contenant du limonène, puis
   B) du dicarbonate de dialkyle, notamment du dicarbonate de diméthyle, est ajouté à la boisson.

2. Procédé selon la revendication 1, **caractérisé en ce que** la formulation contenant du limonène contient également de la cire d'abeilles.

3. Procédé selon la revendication 1 et 2, **caractérisé en ce que** des boissons contenant de l'acide sorbique sont stabilisées contre l'infestation microbienne.

4. Procédé selon la revendication 1, **caractérisé en ce que** le limonène est utilisé en une quantité de 10 à 5 000 ppm.

EP 2 330 930 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7258883 B

**In der Beschreibung aufgeführte Nicht-Patentliteratur**

- **TING-CHAO CHOU.** Theoretical Basis, Experimental Design and Computerized Simulation of Synergism and Antagonism in Drug Combination Studies. *Pharmacological Reviews,* 2006, vol. 58 (3), 621-681